(19) Europäisches Patentamt
European Patent Office
Office européen des brevets

(11) Publication number: 0 091 756 B1

(12) # EUROPEAN PATENT SPECIFICATION

(45) Date of publication of patent specification: 12.07.89

(51) Int. Cl.[4]: A 01 N 47/34 // (A01N47/34, 43:30)

(21) Application number: 83301791.6

(22) Date of filing: 30.03.83

(54) **Synergistic insecticidal composition.**

(30) Priority: 31.03.82 US 363830

(43) Date of publication of application: 19.10.83 Bulletin 83/42

(45) Publication of the grant of the patent: 12.07.89 Bulletin 89/28

(84) Designated Contracting States: CH DE FR GB LI

(56) References cited:
GB-A-2 083 360
JOURNAL OF ECONOMIC ENTOMOLOGY, vol. 69, no. 2, 15th April 1976, pages 178-180, Entomological Society of America, College Park, Maryland, US; E.V. VEA et al.: "Laboratory and field evaluation of insecticides and insect growth regulators for control of the seedcorn maggot"
CHEMICAL ABSTRACTS, vol. 91, no. 19, 5th November 1979, page 191, no. 152699b, Columbus, Ohio, US; G.D. PIMPRIKAR et al.: "Mechanisms of resistance to diflubenzuron in the house fly, Musca domestica (L.)" & PESTIC. BIOCHEM. PHYSIOL. 1979, 12(1), 10-22

(73) Proprietor: RHONE-POULENC NEDERLAND B.V.
Draaistroom 1 Postbus 10
NL-1180 AA Amstelveen (NL)

(72) Inventor: Ayad, Hafez Mohammed
109 Whitehall Way
Gary North Carolina 27511 (US)

(74) Representative: Baverstock, Michael George Douglas et al
BOULT, WADE & TENNANT 27 Furnival Street
London, EC4A 1PQ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 091 756 B1

**Description**

This invention relates, in general, to synergistic insecticidal compositions. In one aspect, this invention relates to compositions which contain certain benzoyl ureas in admixture with a methylenedioxyphenyl derivative, such as piperonyl butoxide. In a further aspect, this invention related to a method of controlling insects by the application of insecticidally effective amounts of mixtures of benzoyl ureas and piperonyl butoxide.

Insecticide synergists are compounds which, although having no direct toxic effect at the dosage employed, are able to substantially enhance the observed toxicity of an insecticide with which they are combined. For example, Wilkinson, Matcalf, and Fukuto, Journal of Agricultural and Food Chemistry, Volume 14, No. 1, pages 73—79 1966, found that certain methylenedioxyphenyl compounds gave synergistic kill of the common house fly when combined with 1-naphthyl N-methylcarbamate, 3,4-dimethoxyphenyl N-methylcarbamate, and 4-di-methylamino-3,5-xylenyl N-methylcarbamate.

Georghiou and Atkins, Jr., Journal of Agricultural Research, Volume 3, No. 1, pages 31—35 1964, demonstrated that piperonyl butoxide increased the toxicity of SEVIN, Zectran and B 37344 (4-methylthio-3,5-xylyl N-methylcarbamate) to honeybees (*Apis mellifera*).

Although the aforementioned references indicate that a synergistic effect is obtained when certain compounds are combined with specific known insecticides, there is no broad teaching that such compounds would have the same effect when mixed with other insecticides.

For example, U.S.—A—4,173,637 and 3,748,356 disclose that the mixtures of the compounds described in those two patents with other insecticides, miticides and plant growth regulators sometimes produce synergistic effects. However it has been observed that mixtures containing Dimilin or N-(2-chlorobenzoyl)N'-[4(3,5-dibromo pyridyl-2-oxy)phenyl]urea, two compounds described in U.S.—A—3,748,356 and 4,173,637, respectively, and piperonyl butoxide do not produce synergistic kill of many insects, such as the armyworm.

Moreover, to attempt to determine which synergist would be effective with which insecticide by a trial and error technique is beyond the economic capability of most research laboratories. Hence, it was indeed unexpected and surprising to find that methylenedioxyphenyl derivatives were effective synergists when employed in admixture with certain benzoyl urea insecticides. Thus, according to the present invention it was found that the amount of benzoyl urea insecticide can be greatly reduced resulting not only in economic savings but more importantly protecting the natural environment as well.

Accordingly, one or more of the following objects can be achieved by the practice of this invention. It is an object of this invention to provide novel insecticidal compositions which contain mixtures of a synergist and certain benzoyl ureas. Another object of this invention is to provide insecticidal compositions containing mixtures of piperonyl butoxide and certain benzoyl ureas. A further object is to provide insecticidal compositions wherein the active toxicant can be employed in a reduced amount and still achieve the desired insect control. A still further object of the invention is to provide a method for controlling insect growth by the application of the composition of this invention. Those and other objects will readily become apparent to those skilled in the art in the light of the teachings herein set forth.

In its broad aspect, the invention is directed to synergistic insecticidal compositions and to a method for their use. As indicated above, the synergistic insecticidal compositions of this invention are comprised of a mixture of a benzoyl urea and a methylenedioxyphenyl derivative.

The benzoyl urea component of the compositions of this invention encompass compounds of the general structure:

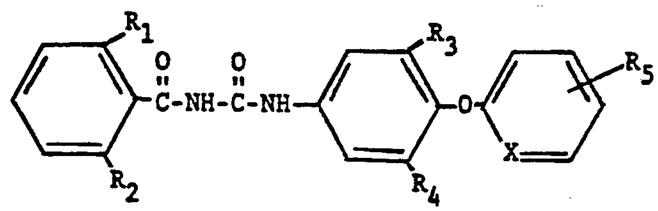

wherein $R_1$ and $R_2$ individually represent hydrogen, chloro, fluoro, or alkyl and alkoxy of up to 10 carbon atoms; $R_3$ and $R_4$ individually represent hydrogen, chloro or trifluoromethyl; $R_5$ represents halo, nitro, cyano, or trifluoromethyl; and X represents carbon or nitrogen, with the proviso that at least one of $R_3$ and $R_4$ is chloro or wherein $R_1$ and $R_2$ are fluoro; $R_3$ is chloro and $R_4$ is hydrogen or chloro; X represents nitrogen and $R_5$ represents at the same time 3-chloro and 5-trifluoromethyl.

Preferably at least one of $R_1$ and $R_2$ is chloro.

Preferably $R_5$ is trifluoromethyl.

Preferred compounds are those of the above formula wherein $R_1$ is chloro or fluoro, $R_2$ is hydrogen or fluoro, $R_3$ and $R_4$ are both chloro, R is 3-chloro, or $R_5$ is trifluoromethyl and X is nitrogen. When X is carbon, $R_5$ may be also 4-nitro.

Illustrative benzoyl ureas are compounds such as

4-nitro-2',6'-dichloro-4'[N(N'-2,6-difluorobenzoyl)-ureido]-diphenyl ether,

4-nitro-2',6'-dichloro-4'[N-(N'-2-fluorobenzoyl-ureido]-diphenyl ether,

4-nitro-2',6'-dichloro-4'[N-(N'-2-methylbenzoyl)-ureido]-diphenyl ether,
4-nitro-2',6'-dichloro-4'[N'-2,6-dichlorobenzoyl)-ureido]-diphenyl ether,
N-(2,6-difluorobenzoyl)N'-[3,5-dichloro-4-(5-trifluoromethylpyridyl-2-oxy)phenyl]urea,
N-(2,6-difluorobenzoyl)N'-[3,5-dichloro-4(3-chloro-5-trifluoromethylpyridyl]-2-oxy) phenyl]urea, and
N-(2,6-difluorobenzoyl)N'-[3-chloro-4-(3-chloro-5-trifluoromethylpyridyl-2-oxy) phenyl] urea.

The benzoyl ureas employed in this invention are prepared by one or more procedures disclosed in the literature. For example, the 4-nitro-4'-[N-[N'-benzoyl)-ureido]diphenyl ethers are prepared either by reacting a nitro-phenoxyaniline with a benzoyl isocyanate or by reacting a 4-isocyanoto-diphenyl ether with a benzamide. Further details for the preparation of the nitro diphenyl ether derivatives are set forth in U.S.—A—4,041,177.

Benzoyl ureas wherein X in the above formulas is nitrogen can be prepared by the methods disclosed in U.S.—A—4,173,637. For example, a benzoyl isocyanate can be reacted with pyridyloxy aniline or a benzamide can be reacted with a pyridyloxy phenyl isocyanate.

The second component of the synergistic insecticidal compositions of this invention is a methylenedioxyphenyl derivative. This component can be represented by the following generic formula:

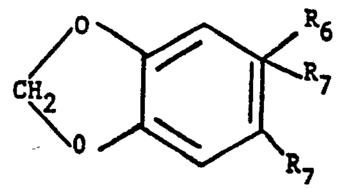

Wherein $R_6$ contains up to 18 carbon atoms and represents alkylsulfinyl-alkyl, or a group consisting of up to 2 linear polyether claims and wherein such group is attached to the aromatic ring through either a carbon or oxygen atom, and $R_7$ represents hydrogen or alkyl of up to 6 carbon atoms.

Illustrative methylenedioxyphenyl derivatives are

2-[-2-(2-butoxyethoxy)ethoxy]-4,5-methylene-dioxy-2-propyltoluene (piperonyl-butoxide), piperonal bis-[2-(2-butoxyethoxy)ethyl]acetal (pirotal), 2-(2-ethoxyethoxy)ethyl 3,4-(methylenedioxy)phenyl acetal of acetaldehyde (Sesamex) 1,2-methylenedioxy-4-[2-(octylsulfinyl) propyl]benzene (sulphoxide).

The proportion of the benzoylurea to the synergist can vary over a wide range depending on such factors as the particular locus to be treated, the particular pest to be combatted and the particular effect desired. The weight proportion of the benzoyl urea to the synergist may be, for example, from 1:0.5 to 1:1000, respectively. Usually there is a greater proportion of synergist than the benzoyl urea. Preferably, the proportion of synergist to the benzoyl urea are 170:1 to 2650:1 respectively.

In the preparation of the novel compositions of the present invention, the methylenedioxyphenyl compound is mixed with the benzoyl urea and a suitable inert carrier as hereinafter defined. One suitable method of preparing the compositions of the present invention is to mix piperonyl butoxide with or without solvent or diluent, with a suitable carrier and then mix the resulting composition with the benzoyl urea with or without solvent.

The synergist insecticidal compositions contemplated in this invention may be applied as insecticides according to methods known to those skilled in the art. These compositions will typically include conventional pest control adjuvants, diluents, modifiers or conditioning agents, herein included in the term "suitable carrier substance", to provide compositions in the form of solution, emulsions, dispersions, powders, dusts, granules or pellets. Thus, the insecticidal compositions can contain one or more surface active agents as a conditioning agent to render the composition readily dispersable in water. The term surface active agent includes wetting agents, dispersing agents or emulsifying agent. The solid formulations of the present invention in the form of powder, dust, pellets or granules can be prepared using such substances as talc, natural clay, pyrophyllite, diatomaceous earth, walnut shells, corn cobs or sugars.

Suitable liquid diluents or carriers include water, petroleum distillates, or other liquid, carriers with or without surface active agents. Liquid concentrates may be prepared by dissolving one of these compositions with a non-phytoxic solvent such as acetone, xylene, or nitro-benzene and dispersing the toxicants in water with the aid of suitable surface active emulsifying and dispersing agents.

The choice of dispersing and emulsifying agents and the amount employed is dictated by the nature of the composition and the ability of the agent to facilitate the dispersion of the toxicant. Generally, it is desirable to use as little of the agent as is possible, consistent with the desired dispersion of the toxicant in the spray so that rain does not re-emulsify the toxicant after it is applied to the plant and wash it off the plant. Nonionic, anionic, or cationic dispersing and emulsifying agents, for example, the condensation products of alkylene oxides with phenol and organic acids, alkyl aryl sulfonates, complex ether alcohols or quaternary ammonium compounds, may be employed for this purpose.

In the preparation of wettable powder or dust or granulated compositions, the active ingredient is dispersed in and on an appropriately divided solid carrier such as natural clay, talc, pyrophyllite, bentonite, diatomaceous earth, fullers earth or corn cobs. In the formulation of the wettable powders the aforementioned dispersing agents as well as lignosulfonates can be included.

The required amount of the toxicants contemplated herein may be applied per acre treated in from 1 to 200 gallons or more of liquid carrier and/or diluent or in from about 5 to 500 pounds of inert solid carrier and/or diluent. The concentration in the liquid concentrate will usually vary from about 10 to 95 percent by weight and in the solid formulations from about 10 to 95 percent by weight and in the solid formulations from about 0.5 to about 90 percent by weight. Satisfactory sprays, dust, or granules for general use contain from about $\frac{1}{4}$ to 15 pounds of active toxicant per acre.

The insecticides contemplated herein prevent attachment by insects upon plants or other material to which the insecticides are applied. With respect to plants, they have a high margin of safety in that when used in sufficient amount to kill or repel the insects, they do not burn or injure the plant, and they resists weathering which includes wash-off caused by rain, decomposition by ultra-violet light, oxidation, or hydrolysis in the presence of moisture or, at least, such decomposition, oxidation, and hydrolysis as would materially decrease the desirable insecticidal characteristics of the toxicants or impart undesirable characteristics, for instance, phototoxicity, to the toxicants. The toxicants are compatible with other constituents of the spray schedule, and they may be used in the soil, upon the seeds, or the roots of plants. Mixtures of the synergistic insecticidal compositions of this invention may be employed if desired as well as combinations of the synergistic insecticidal compositions with one or more fungicides, bactericides, acaricides, nematocides, insecticides or other biologically active compounds.

The synergistic insecticidal compositions of this invention are effective against a wide variety of insects. It is understood that the Southern armyworm evaluated in the working Examples herein is representative of a wider variety of insect which can be controlled by the synergistic insecticidal compositions of this invention. These compositions are particularly useful in controlling insects of agricultural crops, e.g., potatoes, maize, sugar beets, cotton, rice, wheat, tobacco, soybeans, deciduous and citrus fruits.

The following examples illustrate the best mode presently contemplated for the practice of this invention:

## Example 1

Synergistic mixture of N-(2,6-difluoro benzoyl)N'-[3,5-dichloro-4-(3-chloro-5-trifluoromethyl pyridyl-2-oxy)phenyl]urea and piperonyl butoxide for control of Southern army worm larvae (*Spodeptora eridania* (Crammer)).

An aqueous suspension of the benzoylurea and piperonyl butoxide was prepared by dissolving 0.1 grams of each compound in 10 milliliters of acetone in which had been dissolved 0.05 milliliters of an alkylphenoxy polyethyoxyethanol surfactant as an emulsifying or dispersing agent. The resulting solution was mixed with 90 milliliters of water to give 100 milliliters of a suspension containing each test compound in finely divided form. The thus prepared stock suspension contained 0.1 percent by weight of each compound. Potted tender green bean plants of standard height and age were placed on a revolving turntable and sprayed with 100—110 milliliters of test compound formulation by use of a De Vilbiss spray gun set at 40 psig air pressure. This application, which lasted 25 seconds, was sufficient to wet plants to run-off. As a control, 100—110 milliliters of a water-acetone-emulsifier solution containing no test compound were also sprayed on infested plants. When dry, the paired leaves were separated and each one was placed in a 9 centimeter petri dish lined with moistened filter paper. Five randomly selected larvae were introduced into each dish and the dishes were closed. The closed dishes were labeled and held at 80—85 F and 50—55 percent relative humidity for three days. Although the larvae could easily consume the whole leaf within twenty-four hours, no more food was added. Larvae which were unable to move the length of the body, even upon stimulation by prodding, were considered dead. Per cent mortality was recorded for various concentration levels.

The concentration employed in the test results presented below were obtained by diluting the stock suspensions with water. Dilution tests were conducted to determine the $LD_{50}$ (concentration required to kill 50 percent or armyworm larvae). The results of these tests are set forth in Table 1 below:

TABLE I
TOXICITY TO ARMYWORM LARVAE

| | | % Mortality | | |
|---|---|---|---|---|
| Pesticide | Concentration in ppm | Pesticide alone | 500 ppm synergist alone | Pesticide + 500 ppm synergist |
| N-(2,6 difluorobenzoyl)N'-[3-5-dichloro-4-(3-chloro-5-trifluoromethyl-pyridyl-2-oxy)phenyl]urea | 3 | 85 | 0.0 | 100 |
| | 1.5 | 60 | | 95 |
| | 0.75 | 56 | | 85 |
| | 0.38 | 0 | | 67 |
| | 0.19 | — | | 35 |

Example 2

Synergistic Mixture of 1-[3,5-dichloro-4-(4-nitrophenoxy)phenyl]-3-(2-chlorobenzoyl)urea and Piperonyl butoxide

In a manner identical to that employed in Example 1 a suspension of the benzoylurea and piperonyl butoxide was prepared and the concentrations set forth in Table II obtained by diluting the stock suspension with water. Application of the suspension to the green bean plants resulted in the indicated mortality of the armyworm larvae.

TABLE II
TOXICITY TO ARMYWORM LARVAE

| Pesticide | Concentration in ppm | % Mortality Pesticide alone | 500 ppm synergist alone | Pesticide + 500 ppm synergist |
|---|---|---|---|---|
| 1-[3,5 dichloro-4-(4-nitrophenoxy-phenyl]-3-(2-chlorobenzoyl)urea | 1.5 | 59 | 0.0 | 90 |
| | 0.75 | 40 | | 80 |
| | 0.38 | 27 | | 40 |

Example 3

Mixture of N-(2-chlorobenzoyl)N'-4[3,5-dibromopyridyl-2-oxy)phenyl]urea and Piperonyl butoxide

In order to demonstrate that the synergistic effect is selective and not obtained when piperonyl butoxide is admixed with benzoylureas of the type disclosed in U.S.—A—4,173,637, aqueous suspension were prepared of N-(2-chlorobenzoyl N'-[4-(3,5-dibromopyridyl-2-oxy)phenyl]urea and piperonyl butoxide by the same procedure of Examples 1 and 2. Application of the suspension to the green bean plants at the indicated concentration resulted in the mortality set forth in Table III below:

TABLE III
TOXICITY TO ARMYWORM LARVAE

| Pesticide | Concentration in ppm | % Mortality Pesticide alone | 500 ppm synergist alone | Pesticide + 500 ppm synergist |
|---|---|---|---|---|
| N-(2-chlorobenzoyl N'-[4-(3,5-dibromopyridyl-2-oxy)-phenyl] urea. | 20 | 90 | 0.0 | 75 |
| | 10 | 80 | | 67 |
| | 5 | 70 | | 17 |
| | 2.5 | 40 | | 5 |
| | 1.25 | 6 | | 0 |

Example 4

Mixture of Dimilin® and Piperonyl butoxide

In a manner similar to that employed in the previous examples, piperonyl butoxide was admixed the compositon disclosed in U.S.—A—3,748,356 in an aqueous solution and applied to the green bean plants at the concentrations indicated. The concentrations employed and the mortality are set forth in Table IV below:

TABLE IV
TOXICITY TO ARMYWORM LARVAE

| Pesticide | Concentration in ppm | % Mortality: Pesticide alone | 500 ppm synergist alone | Pesticide + 500 ppm synergist |
|---|---|---|---|---|
| Dimilin® | 60 | 80 | 0.0 | 90 |
| | 30 | 50 | | 63 |
| | 15 | 18 | | 22 |
| | 7.5 | 15 | | 15 |
| | 3.8 | 10 | | 0 |

## Claims

1. A synergistic insecticidal composition comprising (1) an effective amount of a substituted benzoyl urea compound of the formula:

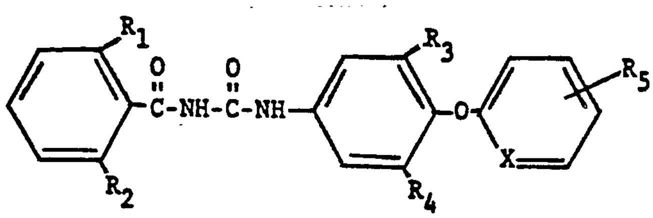

wherein $R_1$ and $R_2$ individually represent hydrogen, chloro, fluoro, or alkyl and alkoxy of up to 10 carbon atoms: $R_3$ and $R_4$ individually represent hydrogen, chloro or trifluoromethyl; $R_5$ represents halo, nitro, cyano, or trifluoromethyl; and X represents carbon or nitrogen, with the proviso that at least one of $R_3$ and $R_4$ is chloro or wherein $R_1$ and $R_2$ are fluoro; $R_3$ is chloro and $R_4$ is hydrogen or chloro; X represents nitrogen and $R_5$ represents at the same time 3-chloro and 5-trifluoromethyl, and (2) an effective amount of a methylenedioxyphenyl compound of the formula:

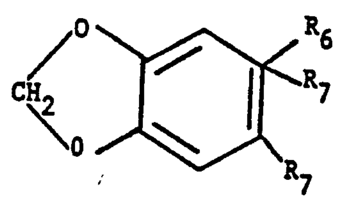

wherein $R_6$ contains up to 18 carbon atoms and represents alkylsulfinyl-alkyl, or a group consisting of up to 2 linear polyether chains, and wherein such group is attached to the aromatic ring through either a carbon or oxygen atom, and $R_7$ represents hydrogen or alkyl of up to 6 carbon atoms.

2. A composition as claimed in claim 1 wherein the weight proportion ratio of the substituted benzoyl urea compound to the methylenedioxyphenyl compound is from 1:0.5 to 1:1000 parts by weight, respectively.

3. A composition as claimed in claim 1 or claim 2 wherein at least one of $R_1$ or $R_2$ is chloro.

4. A composition as claimed in any one of the preceding claims wherein at least one of $R_3$ or $R_4$ is trifluoromethyl.

5. A composition as claimed in any one of the preceding claims wherein $R_5$ is trifluoromethyl.

6. A composition as claimed in claim 1 wherein said benzoyl urea compound is 4-nitro-2',6'-dichloro-4'[N,(N'-2,6-difluoro-benzoyl-ureido]-diphenyl ether, and said methylenedioxyphenyl compound is piperonal bis-[2,-(2-butoxyethoxy)ethyl)acetal].

7. A composition as claimed in claim 1 wherein said benzoyl urea compound is 4-nitro-2',6'-dichloro-4'-[N,(N-2-fluorobenzoyl)-ureido]-diphenyl ether, and said methylenedioxyphenyl compound is sulfoxide 1,2-methylenedioxy-4-[2-(octylsulfinyl) propyl benzene].

8. A composition as claimed in claim 1 wherein said benzoyl urea compound is 4-nitro-2',6'-dichloro-4'-[N-(N'-2-methylbenzoyl)-ureido] -diphenyl ether and said methylenedioxyphenyl compound is 2-[2-(2-butoxyethoxy)ethoxy]-4,5-methylenedioxy-2-propyltoluene.

9. A composition as claimed in claim 1 wherein said benzoyle urea compound is 4-nitro-2',6'-dichloro-4'-[N'-2,6-dichlorobenzoyl)-ureido]-diphenyl ether, and said methylenedioxyphenyl compound is 2-[2-(2-butoxyethoxy)ethoxy]-4,5-methylenedioxy-2-propyltoluene.

10. A composition as claimed in claim 1 wherein said benzoyl urea compound is N-(2,6-difluorobenzoyl)-N'-[4-(3-chloro-5-trifluoromethyl-pyridyl-2-oxy) phenyl] urea, and said methylenedioxyphenyl compound is piperonal bis-[2-(2-butoxyethoxy) ethyl] acetal.

11. A composition as claimed in claim 1 wherein said benzoyl urea compound is N-(2,6-difluorobenzoyl) N'-[3,5-dichloro-4-(5-trifluoro-methylpyridyl-2-oxy) phenyl] urea, and said methylenedioxyphenyl compound is 2-(2-ethoxyethoxy)ethyl 3,4-(methylenedioxy) phenyl acetal of acetaldehyde.

12. A composition as claimed in 1 wherein said benzoyl urea compound is N-(2,6-difluorobenzoyl) N'-[3,5-dichloro-4-(3-chloro-5-trifluoromethylpyridyl-2-oxy)phenyl]urea, and said methylenedioxyphenyl compound is 1,2-methylenedioxy-4-[2-octylsulfinyl) propyl]benzene.

13. A composition as claimed in claim 1 wherein said benzoyl urea compound is N-(2,6-difluorobenzoyl)N'-[3-chloro-4-(3-chloro-5-trifluoromethylpyridyl-2-oxy)phenyl]urea, and said methylenedioxyphenyl compound is piperonal bis- 2,-(2-butoxyethoxy) ethyl]acetal.

14. A method of controlling insects which comprises subjecting them to an effective amount of a synergistic insecticidal composition as claimed in any one of the preceding claims.

**Patentansprüche**

1. Synergistisches insektizides Mittel, umfassend

(1) eine effektive Menge einer substituierten Benzoylharnstoffverbindung der Formel

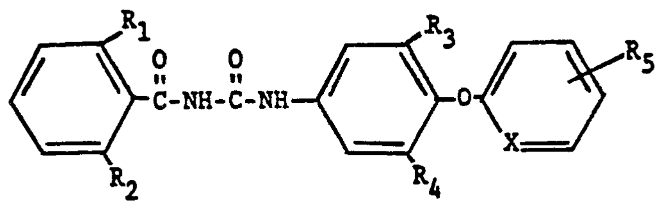

in der $R_1$ und $R_2$ jeweils Wasserstoff, Chlor, Fluor oder Alkyl und Alkoxy mit bis zu 10 Kohlenstoffatomen bedeuten; $R_3$ und $R_4$ jeweils Wasserstoff, Chlor oder Trifluormethyl bedeuten; $R_5$ Halogen, Nitro, Cyano oder Trifluormethyl beduetet und X Kohlenstoff oder Stickstoff ist, mit der Maßgabe, daß mindestens einer der Reste $R_3$ und $R_4$ Chlor ist; oder in der $R_1$ und $R_2$ Fluor sind; $R_3$ Chlor ist und $R_4$ Wasserstoff oder Chlor ist; X Stickstoff und $R_5$ gleichzeitig 3-Chlor und 5-Trifluormethyl bedeutet; und

(2) eine effektive Menge einer Methylendioxyphenylverbindung der Formel

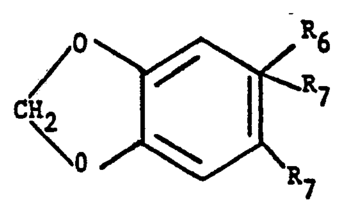

in der $R_6$ bis zu 18 Kohlenstoffatome enthält und alkylsulfinylalkyl bedeutet oder eine Gruppe bestehend aus bis zu zwei linearen Polyetherketten, und wobei eine solche Gruppe an den aromatischen Ring entweder durch ein Kohlenstoff- oder Sauerstoffatom gebunden ist, und $R_7$ Wasserstoff oder Alkyl mit bis zu 6 Kohlenstoffatomen bedeutet.

2. Mittel nach Anspruch 1, wobei das Gewichtsverhältnis der substituierten Benzoylharnstoffverbindung zu der Methylendioxyphenylverbindung von 1:0,5 bis 1:1000 Gewichtsteile ausmacht.

3. Mittel nach Anspruch 1 oder 2, wobei mindestens einer der Reste $R_1$ oder $R_2$ Chlor ist.

4. Mittel nach einem der vorangehenden Ansprüche, wobei mindestens einer der Reste $R_3$ oder $R_4$ Trifluormethyl ist.

5. Mittel nach einem der vorangehenden Ansprüche, wobei $R_5$ Trifluormethyl ist.

6. Mittel nach Anspruch 1, wobei die Benzoylharnstoffverbindung 4-Nitro-2',6'-dichloro-4'[N,(N'-2,6-difluorobenzoyl)ureido]-diphenylether und die Methylendioxyphenylverbindung Piperonal-bis-[2,-(2-butoxyethoxy)ethyl]acetal ist.

7. Mittel nach Anspruch 1, wobei die Benzoylharnstoffverbindung 4-Nitro-2',6'-dichloro-4'[N,(N'-2,6-fluorbenzoyl)ureido]-diphenylether und die Methylendioxyphenylverbindung Sulfoxid-1,2-methylendioxy-4-[2-(octylsulfinyl)-propylbenzol] ist.

8. Mittel nach Anspruch 1, wobei die Benzoylharnstoffverbindung 4-Nitro-2',6'-dichloro-4'[N-(N'-2-methylbenzoyl)ureido]-diphenylether und die Methylendioxyphenyl-Verbindung 2-[2-(2-Butoxyethoxy)ethoxy]-4,5-methylendioxy-2-propyltoluol ist.

9. Mittel nach Anspruch 1, wobei die Benzoylharnstoffverbindung 4-Nitro-2',6'-dichlor-4'[N'-(2,6-dichlorbenzoyl)ureido]-diphenylether und die Methylendioxyphenyl-Verbindung 2-[2-(2-Butoxyethoxy)ethoxy]-4,5-methylendioxy-2-propyltoluol ist.

10. Mittel nach Anspruch 1, wobei die Benzoylharnstoffverbindung N-(2,6-Difluorbenzoyl)-N'-[4-(3-chlor-5-trifluormethyl-pyridyl-2-oxy)phenyl]harnstoff und die Methylendioxyphenyl-Verbindung Piperonal-bis-[2-(2-butoxyethoxy)ethyl] acetal ist.

11. Mittel nach Anspruch 1, wobei die Benzoylharnstoffverbindung N-(2,6-Difluorbenzoyl)-N'-[3,5-dichlor-4-(5-trifluormethylpyridyl-2-oxy)-phenyl]harnstoff und die Methylendioxyphenyl-Verbindung 2-(2-Ethoxyethoxy)ethyl-3,4-(methylendioxy)-phenylacetal von Acetaldehyd ist.

12. Mittel nach Anspruch 1, wobei die Benzoylharnstoffverbindung N-[2,6-Difluorbenzoyl)-N'-[3,5-dichlor-4-(3-chlor-5-trifluormethylpyridyl-2-oxy)phenyl]harnstoff und die Methylendioxyphenyl-Verbindung 1,2-Methylendioxy-4-[2-octylsulfinyl)propyl]-benzol ist.

13. Mittel nach Anspruch 1, wobei die Benzoylharnstoffverbindung N-(2,6-Difluorbenzoyl)-N'-[3-chlor-4-(3-chlor-5-trifluormethylpyridyl-2-oxy)phenyl]harnstoff und die Methylendioxyphenyl-Verbindung Piperonal-bis-[2,-(2-butoxyethoxy)ethyl]acetal ist.

14. Verfahren zur Bekämpfung von Insekten, indem man sie einer wirksamen Menge eines synergistischen insektiziden Mittels nach einem der vorangehenden Ansprüche aussetzt.

**Revendications**

1. Composition insecticide synergique comprenant (1) une quantité efficace d'une benzoylurée substituée, de formule:

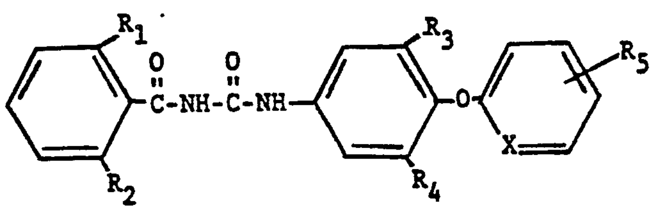

dans laquelle $R_1$ et $R_2$ représentent individuellement l'hyrogène, un groupe chloro, fluoro, alkyle ou alkoxy ayant jusqu'à 10 atomes de carbone; $R_3$ et $R_4$ représentent individuellement l'hydrogène, un groupe chloro ou trifluorométhyle; $R_5$ représente un groupe halogéno, nitro, cyano ou trifluorométhyle; et X représente un atome de carbone ou d'azote, sous réserve qu'au moins l'un des substituants $R_3$ et $R_4$ représente un groupe chloro; ou bien dans laquelle $R_1$ et $R_2$ représentent un groupe fluoro, $R_3$ représente un groupe chloro et $R_4$ représente l'hydrogène ou un groupe chloro, X représente un atome d'azote et $R_5$ représente en même temps un groupe 3-chloro et un groupe 5-trifluorométhyle, et (2) une quantité efficace d'un dérivé de méthylènedioxyphényle de formule:

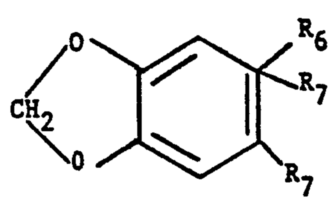

dans laquelle $R_6$ contient jusqu'à 18 atomes de carbone et représente un groupe alkylsulfinyl-alkyle ou un groupe comprenant jusqu'à 2 chaînes polyéther linéaires, et dans laquelle ce groupe est fixé au noyau aromatique par un atome de carbone ou d'oxygène, et $R_7$ représente l'hydrogène ou un groupe alkyle ayant jusqu'à 6 atomes de carbone.

2. Composition suivant la revendication 1, dans laquelle le rapport pondéral de la benzoylurée substituée au dérivé de méthylènedioxyphényle va, respectivement, de 1:0,5 à 1:1000 parties en poids.

3. Composition suivant la revendication 1 ou la revendication 2, dans laquelle au moins l'un des substituants $R_1$ ou $R_2$ représente un groupe chloro.

4. Composition suivant l'une quelconque des revendications précédentes, dans laquelle au moins l'un des substituants $R_3$ et $R_4$ représente un groupe trifluorométhyle.

5. Composition suivant l'une quelconque des revendications précédentes, dans laquelle $R_5$ représente un groupe trifluorométhyle.

6. Composition suivant la revendication 1, dans laquelle la benzoylurée est l'éther de 4-nitro-2',6'-dichloro-4'[N,(N'-2,6-difluoro-benzoyl-uréido]-diphényle et le dérivé de méthylènedioxyphényle est le bis[2-(2-butoxy éthoxy)éthyl)acétal] de pipéronal.

7. Composition suivant la revendication 1, dans laquelle la benzoylurée est l'éther de 4-nitro-2',6'-dichloro-4'[N,(N-2-fluorobenzoyl-uréido]-diphényle et le dérivé de méthylènedioxyphényle est le sulfoxyde du 1,2-méthylènedioxy-4-[2-(octylsulfinyl)propylbenzène].

8. Composition suivant la revendication 1, dans laquelle la benzoylurée est l'éther de 4-nitro-2',6'-dichloro-4'-[N-(N'-2-méthylbenzoyl)-uréido]-diphényle et le dérivé de méthylènedioxyphényle est le 2-[2-(2-butoxyéthoxy)éthoxy]-4,5-méthylènedioxy-2-propyltoluène.

9. Composition suivant la revendication 1, dans laquelle la benzoylurée est l'éther de 4-nitro-2',6'-dichloro-4'-[N'-2,6-dichlorobenzoyl)uréido]-diphenyle et le dérivé de méthylènedioxyphényle est le 2-[2-(2-butoxyéthoxy)éthoxy]-4,5-méthylènedioxy-2-propyltoluène.

10. Composition suivant la revendication 1, dans laquelle la benzoylurée est la N-(2,6-difluorobenzoyl)-N'-[4-(3-chloro-5-trifluorométhyl-pyridyl-2-oxy)phényl]urée et le dérivé de méthylènedioxyphényle est le bis-[2-(2-butoxyéthoxy)éthyl]acétal de pipéronal.

11. Composition suivant la revendication 1, dans laquelle la benzoylurée est la N-(2,6-difluoro-benzoyl)N'-[3,5-dichloro-4-(5-trifluoro-méthylpyridyl-2-oxy)phényl]urée et le dérivé de méthylènedioxyphényle est le 2-(2-éthoxyéthoxy)éthyl-3,4-(méthylènedioxy)phénylacétal de l'acétaldéhyde.

12. Composition suivant la revendication 1, dans laquelle la benzoylurée est la N-(2,6-difluorobenzoyl)-N'-[3,5-dichloro-4-(3-chloro-5-trifluorométhylpyridyl-2-oxy)phényl]urée et le dérive de méthylènedioxyphényle est le 1,2-méthylènedioxy-4-[2-octylsulfinyl)propyl]benzène.

13. Composition suivant la revendication 1, dans laquelle la benzoylurée est la N-(2,6-difluorobenzoyl)-N'-[3-chloro-4-(3-chloro-5-trifluorométhylpyridyl-2-oxy)phénylurée et le dérivé de méthylènedioxyphényle est le bis-2-(2-butoxyéthoxy)éthyl]acétal de pipéronal.

14. Procédé de lutte contre des insectes, qui consiste à les mettre en contact avec une quantité efficace d'une composition insecticide synergique suivant l'une quelconque des revendications précédentes.